# EUROPEAN PATENT SPECIFICATION

(11) **EP 4 100 452 B1**
(45) Date of publication and mention of the grant of the patent: **25.12.2024**
(21) Application number: 21704341.3
(22) Date of filing: 12.01.2021
(51) Int. Cl.: C08G 18/10, C08G 18/12, C08G 18/24, C08G 18/28, C08G 18/32, C08G 18/42, C08G 18/48, C08G 18/64, C08G 18/66, C08G 18/73, C08G 18/76, C08K 3/013, C08K 3/22, C08K 3/26, C08K 5/00, C08L 75/08, H01M 50/00, H01M 10/613, H01M 10/625, H01M 10/653, H01M 50/20

(54) **POLYURETHANE BASED THERMAL INTERFACE MATERIAL COMPRISING SILANE TERMINATED URETHANE PREPOLYMERS**
POLYURETHAN-BASIERTES THERMISCHES GRENZFLÄCHENMATERIAL MIT SILAN-TERMINIERTEN URETHAN-PREPOLYMEREN
MATÉRIAU D'INTERFACE THERMIQUE À BASE DE POLYURÉTHANE COMPRENANT DES PRÉPOLYMÈRES D'URÉTHANE À TERMINAISON SILANE

(30) Priority: 03.02.2020 US 202062969276 P
(43) Date of publication of application: 14.12.2022
(73) Proprietor: DDP Specialty Electronic Materials US, LLC, Wilmington, DE 19805 (US)
(72) Inventor: GRUNDER, Sergio, 8807 Freienbach (CH); ARDIZZONE, Filippo, 8807 Freienbach (CH); SCHNEIDER, Daniel, 8807 Freienbach (CH); LUTZ, Andreas, 8807 Freienbach (CH); HILLESHEIM, Nina, 8807 Freienbach (CH)
(74) Representative: Abitz & Partner
(86) International application number: PCT/US2021/013032
(87) International publication number: WO 2021/158336

(56) References cited:
- EP-A1- 2 546 872
- CN-A- 107 903 865
- US-A- 4 066 578
- US-A1- 2013 102 738

## Description

### FIELD OF DISCLOSURE

The disclosure relates to thermal interface materials and their use in battery powered vehicles.

### BACKGROUND

Compared to traditional modes of travel, battery powered vehicles offer significant advantages, such as light weight, reduced CO₂ emission, etc.

EP 2 546 872 A1 relates to a heat insulation/heat dissipation sheet that, in electronic equipment having a heat-generating component mounted on a circuit board or the like, a secondary battery, or a general device, efficiently dissipates heat generated from the heat-generating component or the secondary battery.

CN 107 903 865 A relates to the technical field of sealants, in particular to a one-component moisture-curing polyurethane sealant containing a novel water-removing agent and a preparation method thereof.

US 2013/0102738 A1 relates to one-component, silane-crosslinking compositions which are used as adhesives having high tensile shear strength and a high curing rate.

US 4 066 578 A relates to a polyurethane composition having improved flame retardancy and to a method for preparing such compositions.

However, to ensure optimal use of the technology, a number of technological problems still need to be overcome. For example, one current effort in the industry is to increase the driving range of battery powered vehicles by developing batteries with higher density. And this leads to the need to develop better thermal management systems for high density batteries.

In battery powered vehicles, battery cells or modules are thermally connected to cooling units by thermal interface materials (TIM). Such TIM are typically formed of polymeric materials filled with thermally conductive fillers. To achieve a thermal conductivity of 2 W/m·K or higher, fillers with thermal conductivity of 100 W/m·K or higher, such as boron nitrides or aluminum powders, may be used. However, such fillers are expensive and abrasive. A cheaper and non-abrasive alternative is aluminum trihydroxide (ATH) and it has been demonstrated that obtaining polyurethane based TIM with high loading of ATH was achievable, which has high thermal conductivity and low viscosity. However, it was found that when such TIM was placed in a vertical position under climate conditions, it tends to slide. Thus, there still is improvement needed to solve this sliding problem.

### SUMMARY

Provided herein are thermal interface material compositions comprising: a) a non-reactive polyurethane prepolymer, which i) is a reaction product of at least one polyisocyanate and at least one hydroxy group containing compound, and ii) contains less than 0.8 wt% of residual isocyanate groups; b) 70-95 wt% of aluminum trihydroxide; c) 0.15-1.5 wt% of at least one silane terminated urethane prepolymer; and d) 1-20 wt% of at least one plasticizer, with the total weight of the thermal interface material totaling to 100 wt%.

In one embodiment of the thermal interface material composition, the non-reactive polyurethane prepolymer is present at a level of 1-25 wt%, based on the total weight of the composition.

In a further embodiment of the thermal interface material composition, the silane terminated urethane prepolymer is present at a level of 0.15-1.2 wt%, based on the total weight of the composition.

In a yet further embodiment of the thermal interface material composition, the silane terminated urethane prepolymer is present at a level of 0.2-0.8 wt%, based on the total weight of the composition.

In a yet further embodiment of the thermal interface material composition, the silane terminated urethane prepolymer is selected from reaction products of at least one isocyanate functionalized silane with one or more polyols, reaction products of at least one isocyanate functionalized silane with one or more hydroxyl terminated prepolymers, and reaction products of at least one nucleophile functionalized silane with one or more isocyanate terminated prepolymers.

In a yet further embodiment of the thermal interface material composition, the silane terminated urethane prepolymer has a molecular weight ranging from 200-5000.

In a yet further embodiment of the thermal interface material composition, the silane terminated urethane prepolymer has a molecular weight ranging from 300-3000.

In a yet further embodiment of the thermal interface material composition, the silane terminated urethane prepolymer has a molecular weight ranging from 500-2000.

Further provided herein are articles comprising the thermal interface material composition provided above.

In one embodiment of the article, the article further comprises a battery module that is formed of one or more battery cells and a cooling unit, wherein, the battery module is connected to the cooling unit via the thermal interface material composition.

### DETAILED DESCRIPTION

Disclosed herein are thermal interface materials (TIM) composition comprising: a) a non-reactive polyurethane prepolymer; b) 70-95 wt% of aluminum trihydroxide (ATH); c) 0.15-1.5 wt% of at least one silane terminated urethane prepolymer; and d) 1-20 wt% of at least one plasticizer, with the total weight of the thermal interface material totaling to 100 wt%.

In accordance with the present disclosure, the non-reactive polyurethane prepolymers used herein are reaction products of at least one polyisocyanate and at least one hydroxyl group containing compound. In addition, the non-reactive polyurethane prepolymers used herein are substantially free of residual isocyanate groups, that is there are less than 0.8 wt% or less than 0.4 wt% of residual isocyanate groups in the prepolymer.

In accordance with the present disclosure, the polyisocyanates used herein are multifunctional isocyanates (e.g., diisocyanates and triisocyanates) and may be aliphatic, alicyclic, or aromatic polyisocyanates. Exemplary multifunctional isocyanates used herein include, without limitation, ethylene diisocyanate; hexamethylene-1,6-diisocyanate (HDI); isophorone diisocyanate (IPDI); 4,4'-, 2,2'- and 2,4'-dicyclohexylmethane diisocyanate (H₁₂MDI); norbornene diisocyanate; 1,3- and 1,4-(bisisocyanatomethyl)cyclohexane (including cis- or trans-isomers thereof); tetramethylene-1,4-diisocyanate (TMXDI); 1,12-dodecane diisocyanate; 2,2,4-trimethylhexamethylene diisocyanate; 2,2'-, 2,4'- and 4,4'-methyldiphenyl diisocyanate (MDI); carbodiimide modified MDI; 2,4- and 2,6-toluene diisocyanate (TDI); 1,3- and 1,4-phenylene diisocyanate; 1,5-naphthylene diisocyanate; triphenylmethane-4,4',4"-triisocyanate; polyphenylpolymethylene polyisocyanates; etc. In one embodiment, the polyisocyanates used herein are aliphatic polyisocyanates. In a further embodiment, the polyisocyanates used herein are selected from hexamethylene-1,6-diisocyanate; isophorone diisocyanate; 1,3-(bisisocyanatomethyl) cyclohexane; 1,4-(bisisocyanatomethyl)cyclohexane; or a mixture of two or more thereof. In a yet further embodiment, the polyisocyanate used herein is hexamethylene-1,6-diisocyanate.

The polyisocyanates may have a percent NCO amount of 10-60%. In certain embodiments, the polyisocyanates used herein may have an average isocyanate functionality of at least 2, or at least 2.2, or at least 2.4; and no greater than 4, or no greater than 3.5, or no greater than 3. In a further embodiment, the equivalent weight of the polyisocyanate may be at least 100, or at least 110, or at least 120; and may be no greater than 300, or no greater than 250, or no greater than 200.

The hydroxyl group containing compounds used herein may contain one or more hydroxyl groups, such as monols, diols, triols, or polyols. Exemplary hydroxyl group containing compounds include, without limitation, polyether polyols, polyester polyols, polycarbonate polyols, alcohols, etc. In one embodiment, the hydroxyl group containing compounds are polyethers containing one or more terminal hydroxyl groups, i.e., polyether polyols. Exemplary polyether polyols used herein include, without limitation, i) monols, such as, alkoxylated alcohols (with the alkoxylating agent being ethylene oxide, propyleneoxide, or butyleneoxide and the initiating alcohol being methanol, ethanol, butanol, or longer aliphatic alcohols) or fatty acid based alcohols; ii) diols, such as, 1,4-butanediol; iii) polyether polyols based on polyethylene oxide, polypropyleneoxide, or polybutylene oxide; etc. The hydroxyl group containing compounds used herein may have a functionality of 1-7, or 1-5, or 1-3, or 1-2 and a molecular weight of 90-5000, or 90-3000, or 90-2000.

Along with the polyisocyanates and the hydroxyl group containing compounds, additional additives also may be added when preparing the non-reactive polyurethane prepolymers. These include catalysts, chain extenders, crosslinkers, fillers, moisture scavengers, colorants, etc. In particular, a number of aliphatic and aromatic amines (e.g., diaminobicyclooctane, 1,4-diazabicyclo[2.2.2]octane (DABCO) etc.), organometallic compounds (e.g., dibutyltin dilaurate (DBTDL), dibutyltin diacetate), alkali metal salts of carboxylic acids and phenols (calcium, magnesium, strontium, barium, salts of hexanoic, octanoic, naphthenic, linolenic acid) may be used as catalysts.

Additionally, to obtain the non-reactive polyurethane prepolymers containing less than 0.8 wt% of residual isocyanate groups, stoichiometric amount or excessive stoichiometric amount of the hydroxyl containing compounds needs to be used in the reaction, that is the ratio between -OH groups in the hydroxyl group containing compounds to -NCO groups in the polyisocyanates is greater than or equal to 1. The preparation of the non-reactive polyurethane prepolymers include: mixing the at least one polyisocyanates, the at least one hydroxyl group containing compound, and other additives, such as catalysts, together; stirring the reaction mixture under an atmosphere of nitrogen or under vacuum at 20-80°C for 10-60 min; cooling the reaction product to room temperature; and placing and storing the reaction product in a sealed container.

The non-reactive polyurethane prepolymers used herein may have a molecular weight ranging from 2,000-50,000 g/mol, or from 3,000-30,000 g/mol, or from 4,000-15,000 g/mol.

In accordance with the present disclosure, the non-reactive polyurethane prepolymers may be comprised in the TIM composition at a level of 1-25 wt%, or 2-20 wt%, or 5-15 wt%, based on the total weight of the composition.

The ATH used herein may be monomodal ATH powders or ATH powders having a multi-modal particle size distribution (e.g., bi-modal, trimodal, and the like). When monomodal ATH powders are used, the average particle size may range from 5-100 µm. And when multi-modal ATH powders are used, the average particle size of the smallest particles may be less than 10 µm, while the average particle size of the largest particles may be greater than 50 µm. Additionally, the ATH powders used herein also may be surface treated with silane, titanate, carboxylates, etc.

In accordance with the present disclosure, the ATH powders may be comprised in the composition at a level of 70-95 wt%, or 75-90 wt%, or 80-85 wt%.

Silane terminated urethane prepolymers are urethane prepolymers in which some or all of the isocyanate groups are end capped with organosilanes. The silane terminated urethane prepolymers may be prepared by reacting at least one isocyanate functionalized silane with one or more polyols, or reacting at least one isocyanate functionalized silane with one or more hydroxyl terminated prepolymers, or reacting at least one nucleophile functionalized silane (e.g., amino silane, mercapto silane, etc.) with one or more isocyanate terminated prepolymer(s). The prepolymers can be selected from the group consisting of polyurethanes, polyureas, polyethers, polyesters, poly(meth) acrylates, polycarbonates, polystyrenes, polyamines or polyamides, polyvinyl esters, styrene/butadiene copolymers, polyolefins, polysiloxanes, and polysiloxane-urea/urethane copolymers. The silane terminated urethane prepolymers used herein may have a molecular weight ranging from 200-5000, or 300-3000, or 500-2000.

Suitable silane terminated urethane prepolymers may be any of those disclosed in EP 1924621 and U.S. Pat. Nos. 3,933,756; 5,756,751; 6,288,198; 6,545,087; 6,703,453; 6,809,170; 6,833,423; 6,844,413; 6,887,964; 6,998,459; 7,115,696; 7,465,778; 7,060,750; and 7,309,753. Suitable silane terminated urethane prepolymers also are available commercially. For examples, they may be obtained from Covestro under the trade name Desmoseal^{™}, or from Kaneka under the trade name MS Polymer^{™}, or from Momentive under the trade name SPUR+*.

In accordance with the present disclosure, the at least one silane terminated urethane prepolymer may be comprised in the TIM composition at a level of 0.15-1.5 wt%, or 0.15-1.2 wt%, or 0.2-0.8 wt%, based on the total weight of the composition.

The TIM composition disclosed herein further comprises 1-20 wt%, or 2-15 wt%, or 3-10 wt% of at least one plasticizer, based on the total weight of the composition. Plasticizers are well known in the art and it is within the ability of those skilled in the art to select suitable plasticizers according to parameters such as compatibility and desired properties of the final composition (e.g., viscosity).

In general, suitable plasticizers include ester derivatives of such acids and anhydrides as adipic acid, azelaic acid, benzoic acid, citric acid, dimer acids, fumaric acid, isobutyric acid, isophthalic acid, lauric acid, linoleic acid, maleic acid, maleic anyhydride, melissic acid, myristic acid, oleic acid, palmitic acid, phosphoric acid, phthalic acid, ricinoleic acid, sebacic acid, stearic acid, succinic acid, 1 ,2-benzenedicarboxylic acid, and the like, and mixtures thereof. Also suitable are epoxidized oils, glycerol derivatives, paraffin derivatives, sulfonic acid derivatives, and the like, and mixtures thereof and with the aforesaid derivatives. Specific examples of such plasticizers include diethylhexyl adipate, heptyl nonyl adipate, diisodecyl adipate, the adipic acid polyesters, dicapryl adipate, dimethyl azelate, diethylene glycol dibenzoate and dipropylene glycol dibenzoate, polyethylene glycol dibenzoate, 2,2,4-trimethyl-1,3-pentanediol monoisobutyrate benzoate, 2,2,4-trimethyl-1,3-pentanediol diisobutyrate, methyl (or ethyl, or butyl) phthalyl ethyl glycolate, triethyl citrate, dibutyl fumarate, 2,2,4-trimethyl-1,3-pentanediol diisobutyrate, methyl laurate, methyl linoleate, di-n-butyl maleate, tricapryl trimellitate, heptyl nonyl trimellitate, triisodecyl trimellitate, triisononyl trimellitate, isopropyl myristate, butyl oleate, methyl palmitate, tricresyl phosphate, dimethyl phthalate, diethyl phthalate, dibutyl phthalate, diisobutyl phthalate, di-2-ethylhexyl phthalate, octyl decyl phthalate, diisodecyl phthalate, heptyl nonyl phthalate, diundecyl phthalate, ditridecyl phthalate, dicyclohexyl phthalate, diphenyl phthalate, butyl benzyl phthalates such as the n-butylbenzyl ester of o-phthalic acid, isodecyl benzyl phthalate, alkyl (C7/C9) benzyl phthalate, dimethoxyethyl phthalate, 7-(2,6,6,8-tetramethyl-4-oxa-3-oxo-nonyl) benzyl phthalate, di-2-ethylhexyl sebacate, butyl ricinoleate, dimethyl sebacate, methyl stearate, diethyl succinate, the butyl phenylmethyl ester of 1,2-benzenedicarboxylic acid, epoxidized linseed oil, glycerol triacetate, chloroparaffins having 40% to 70% Cl, o,p-toluenesulfonamide, N-ethyl p-toluene sulfonamide, N-cyclohexyl p-toluene sulfonamide, sulfonamide-formaldehyde resin, and mixtures thereof. Other suitable plasticizers known to those skilled in the art include castor oil, aromatic petroleum condensate, partially hydrogenated terphenyls, silicone plasticizers such as dimethicone copolyol esters, dimethiconol esters, silicone carboxylates, guerbet esters, and the like, alone or as mixtures with other plasticizers.

In addition, up to 10 wt%, or 1-10 wt%, or 2-7 wt%, or 2-5 wt%, of precipitated calcium carbonate may be added into the TIM composition. Without being bound by any particular theory, it is believed that the addition of the optional precipitated calcium carbonate may improve the anti-settling of the ATH.

Furthermore, the TIM compositions disclosed herein may optionally further comprise other suitable additives, such as, catalysts, stabilizers, adhesion promoters, fillers, colorants, etc. Such optional additives may be present at a level of up to 10 wt%, or up to 8 wt%, or up to 5 wt%, based on the total weight of the TIM composition.

As demonstrated below by the examples, when placed vertically, TIM without silane terminated urethane prepolymer tends to slide after exposure to climate conditions, while the addition of more than 0.1 wt% of silane terminated urethane prepolymer in the TIM composition solves the sliding problem. Moreover, it is shown that without plasticizer, the TIM was too viscous to be useful.

Further disclosed herein are battery pack systems in which a cooling unit or plate is coupled to a battery module (formed of one or more battery cells) via the TIM composition described above such that heat can be conducted therebetween. In one embodiment, the battery pack systems are those used in battery powered vehicles.

### EXAMPLES

### Materials

- HDI - Hexamethylene-1,6-ciisocyanate (HDI) obtained from Covestro under the trade name Desmodur^{™} H;
- Monol - C₁₂-C₁₄ fatty alcohol initiated fully propoxylated (with propyleneoxide) monol (MW 935 g/mol, OH-number: 60.4, equivalent weight: 927) obtained from Dow, Inc.;
- Polyol - polypropyleneoxide polyol (functionality: 2, MW: 1000 g/mol) obtained from Dow Inc.;
- Catalyst - dibutyltin dilaurate (DBTDL) obtained from Evonik under the trade name DABCO^{™} T-12;
- STP - an aliphatic silane-terminated urethane prepolymer obtained from Covestro under the trade name Desmoseal^{™} S XP 2636;
- Plasticizer - trimethylolpropane trioleate;
- ATH - bimodally distributed aluminum trihydroxide, with the average particle size of the small particles less than 10 µm and the average particle size of the large particles greater than 50 µm;
- Polyester Polyol -1 - polyester polyol with a melting point of 65°C obtained from Evonik under the trade name Dynacol^{™} 7381;
- Polyester Polyol-2 - polyester polyol with a melting point of 45°C from Perstorp;
- Polyester Urethane Prepolymer - a reaction product of 4,4'-methyldiphenyl diisocyanate with a polyester polyol (Polyester Polyol-1) in the presence of diisononylphthalate;
- Silane - vinyltrimethoxysilane.

### Non-reactive Polyurethane Prepolymers

Non-reactive polyurethane prepolymers Pre-1 and Pre-2 were prepared as follows: mixing all components as listed in Table 1, except Catalyst, in a reactor; heating the reactor to 60°C; adding Catalyst into the mixture; stirring the mixture for 45 min at 80°C under an atmosphere of nitrogen and then for 10 min under vacuum; cooling the colorless reaction product to room temperature; and transferring the product into a container. The mass-weighted molecular weight (Mw) and polydispersity index (PDI) of Pre-1 and Pre-2 were measured by gel permeation chromatography (GPC) using Viscotek GPCmax from Malvern Panalytical.

**TABLE 1**

| | Pre-1 | Pre-2 |
|---|---|---|
| Formulation | | |
| HDI (wt%) | 10.9 | 10.47 |
| Monol (wt%) | 57.31 | 57.77 |
| Polyol (wt%) | 31.46 | 31.71 |
| 1,4-butanediol (wt%) | 0.28 | - |
| Catalyst (wt%) | 0.05 | 0.05 |

| Properties | | |
|---|---|---|
| Viscosity (45°C, CP4/20, up/down Newtonian) (Pa·s) | 4 | 3 |
| NCO (%) | 0 | 0 |
| Mw | 4000 | 4200 |
| PDI | 1.5 | 1.3 |

### Comparative Examples CE1-CE5 and Examples E1-E7

### Sample Preparation

In each of the Comparative Examples CE1-CE5 and Examples E1-E7, all components as listed in Table 2 (first liquid components, then solid components) were added in a planetary mixer or a dual asymmetric centrifuge, mixed for about 30 min under vacuum, and the resulting TIM (in paste form) was then transferred into cartridges, pails, or drums for storage.

### Thermal Conductivity

The thermal conductivity for the TIM paste obtained in each sample was measured according to ASTM 5470, using a TIM tester from ZFW Stuttgart. The measurement was performed in Spaltplus mode between 1.8-1.2 mm thickness and the absolute thermal conductivity λ (W/m·K) was recorded.

### Press-in Force

The press-in force for the TIM paste in each sample was measured using a tensiometer (Zwick). The TIM paste from each sample were placed on a metal surface. An aluminum piston with 40 mm diameter was placed on top of the sample paste and the sample paste was compressed to 5 mm (initial thickness). The sample paste was then further compressed to a thickness of 0.3 mm with 1 mm/s velocity and the force deflection curve was recorded. The force (N) at 0.5 mm thickness was recorded as the press-in force.

### Viscosity

Viscosity was measured by rotational rheology on a rheometer with a plate-plate geometry (25 mm diameter parallel plates) at 23°C. A shear rate was driven from 0.001 to 20 1/s and the viscosity at 10 1/s was reported. The initial viscosity was measured directly after application of the TIM, while the viscosity after 7-day climate change is the viscosity of the TIM after it had been exposed for 7 days to climate change condition, in which each cycle took 12 hours to complete and consisted of 4 hours at -40°C (non-controlled humidity), 4 hours to adjust temperature to 80°C, and 4 hours at 80°C with 80 w% relative humidity.

### Sliding Test

During sliding test, the TIM in each sample was placed between two substrates (an e-coated steel substrate and a glass substrate) whereas the thickness of the compressed TIM was controlled with spacers at about 3 mm. The sandwich samples were then exposed at an angle of 20° for 4 weeks to climate change condition in a climate chamber. Thereafter, the sample was observed for sliding and crack formation.

As demonstrated herein by E1-E7, by the addition of 0.25 wt% or more STP, the TIM exhibit no visible crack and less than 1 mm sliding. In addition, as shown by CE4, the absence of plasticizer caused the TIM composition to have a viscosity too high to be useful.

**Table 2**

| | CE1 | CE2 | CE3 | CE4 | CE5 | E1 | E2 | E3 | E4 | E5 | E6 | E7 |
|---|---|---|---|---|---|---|---|---|---|---|---|---|
| Formulation | | | | | | | | | | | | |
| Pre-1 (w%) | 9 | 8.7 | - | 14.2 | 9.0 | 8.95 | 8.7 | 8.7 | 8.7 | - | - | 8.7 |
| Pre-2 (w%) | - | - | - | - | - | - | - | - | - | 8.7 | 8.7 | - |
| STP (wt%) | - | - | 0.5 | 0.5 | 0.1 | 0.25 | 0.5 | 0.5 | 0.5 | 0.5 | 0.5 | 1.0 |
| Plasticizer (w%) | 5.5 | 6.3 | 14.2 | - | 5.5 | 5.5 | 5.5 | 5.5 | 5.5 | 5.5 | 5 | 5.0 |
| ATH (w%) | 82 | 82 | 82 | 82 | 82 | 82 | 82 | 82 | 82 | 82 | 82 | 82 |
| Polyester Urethane Prepolymer (w%) | 0.3 | - | 0.3 | 0.3 | 0.3 | 0.3 | 0.3 | - | - | 0.3 | 0.3 | 0.3 |
| Polyester Polyol-1 (wt%) | - | - | - | - | - | - | - | 0.3 | - | - | - | - |
| Polyester Polyol-2 (wt) | - | - | - | - | - | - | - | - | 0.3 | - | - | - |
| Silane (w%) | - | - | - | - | - | - | - | - | - | - | 0.5 | - |
| Precipitated calcium carbonate (w%) | 2.2 | 2 | 2 | 2 | 2.1 | 2 | 2 | 2 | 2 | 2 | 3 | 2 |
| Calcium Oxide (wt%) | 1 | 1 | 1 | 1 | 1 | 1 | 1 | 1 | 1 | 1 | - | 1 |
| Properties | | | | | | | | | | | | |
| Thermal Conductivity λ (W/m·K) | 2.34 | 2.02 | 2.08 | 2.11 | 2.31 | 2.25 | 2.26 | 2.14 | 2.24 | 2.52 | 2.39 | 2.63 |
| Press-in Force at 0.5 mm (N) | 690 | 468 | 260 | 1767 | 729 | 888 | 903 | 683 | 789 | 727 | 854 | 1052 |
| Viscosity initial at 10 1/s (Pa·s) | 455 | 238 | 148 | 1714 | 804 | 654 | 665 | 887 | 641 | 803 | 887 | 1065 |
| Viscosity after 7-day climate change at 10 1/s (Pa·s) | 597 | 347 | 497 | 1325 | 797 | 1070 | 629 | 1243 | 754 | 1008 | 1608 | Not measur able |
| Sliding | >70mm | >70mm | <1mm | <1mm | >50mm | < 1mm | < 1mm | < 1mm | <1mm | <1mm | <1mm | <1mm |
| Crack | No | No | Yes | No | No | No | No | No | No | No | No | No |

## Claims

1. A thermal interface material composition comprising:
a) a non-reactive polyurethane prepolymer, which i) is a reaction product of at least one polyisocyanate and at least one hydroxy group containing compound, and ii) contains less than 0.8 wt% of residual isocyanate groups;
b) 70-95 wt% of aluminum trihydroxide;
c) 0.15-1.5 wt% of at least one silane terminated urethane prepolymer; and
d) 1-20 wt% of at least one plasticizer,
with the total weight of the thermal interface material totaling to 100 wt%.

2. The thermal interface material composition of Claim 1, wherein, the non-reactive polyurethane prepolymer is present at a level of 1-25 wt%, based on the total weight of the composition.

3. The thermal interface material composition of Claim 1, wherein, the silane terminated urethane prepolymer is present at a level of 0.15-1.2 wt%, based on the total weight of the composition.

4. The thermal interface material composition of Claim 3, wherein, the silane terminated urethane prepolymer is present at a level of 0.2-0.8 wt%, based on the total weight of the composition.

5. The thermal interface material composition of Claim 1, wherein, the silane terminated urethane prepolymer is selected from reaction products of at least one isocyanate functionalized silane with one or more polyols, reaction products of at least one isocyanate functionalized silane with one or more hydroxyl terminated prepolymers, and reaction products of at least one nucleophile functionalized silane with one or more isocyanate terminated prepolymers.

6. The thermal interface material composition of Claim 1, wherein, the silane terminated urethane prepolymer has a molecular weight ranging from 200-5000.

7. The thermal interface material composition of Claim 6, wherein, the silane terminated urethane prepolymer has a molecular weight ranging from 300-3000.

8. The thermal interface material composition of Claim 7, wherein, the silane terminated urethane prepolymer has a molecular weight ranging from 500-2000.

9. An article comprising the thermal interface material composition recited in Claim 1.

10. The article of Claim 9, which further comprises a battery module that is formed of one or more battery cells and a cooling unit, wherein, the battery module is connected to the cooling unit via the thermal interface material composition.

## Patentansprüche

1. Thermische Grenzflächenmaterialzusammensetzung, umfassend:
a) ein nichtreaktives Polyurethanvorpolymer, das i) ein Reaktionsprodukt mindestens eines Polyisocyanats und mindestens einer eine Hydroxygruppe enthaltenden Verbindung ist, und ii) weniger als 0,8 Gew.-% restliche Isocyanatgruppen enthält;
b) 70 bis 95 Gew.-% Aluminiumtrihydroxid;
c) 0,15 bis 1,5 Gew.-% mindestens eines silanterminierten Urethanvorpolymers; und
d) 1 bis 20 Gew.-% mindestens eines Weichmachers,
wobei das Gesamtgewicht des thermischen Grenzflächenmaterials insgesamt 100 Gew.-% beträgt.

2. Thermische Grenzflächenmaterialzusammensetzung nach Anspruch 1, wobei das nichtreaktive Polyurethanvorpolymer auf einem Niveau von 1 bis 25 Gew.-%, auf das Gesamtgewicht der Zusammensetzung bezogen, vorliegt.

3. Thermische Grenzflächenmaterialzusammensetzung nach Anspruch 1, wobei das silanterminierte Urethanvorpolymer auf einem Niveau von 0,15 bis 1,2 Gew.-%, auf das Gesamtgewicht der Zusammensetzung bezogen, vorliegt.

4. Thermische Grenzflächenmaterialzusammensetzung nach Anspruch 3, wobei das silanterminierte Urethanvorpolymer auf einem Niveau von 0,2 bis 0,8 Gew.-%, auf das Gesamtgewicht der Zusammensetzung bezogen, vorliegt.

5. Thermische Grenzflächenmaterialzusammensetzung nach Anspruch 1, wobei das silanterminierte Urethanvorpolymer unter Reaktionsprodukten von mindestens einem isocyanatfunktionalisierten Silan mit einem oder mehreren Polyolen, Reaktionsprodukten von mindestens einem isocyanatfunktionalisierten Silan mit einem oder mehreren hydroxylterminierten Vorpolymeren und Reaktionsprodukten von mindestens einem nucleophilen funktionalisierten Silan mit einem oder mehreren isocyanatterminierten Vorpolymeren ausgewählt ist.

6. Thermische Grenzflächenmaterialzusammensetzung nach Anspruch 1, wobei das silanterminierte Urethanvorpolymer ein Molekulargewicht im Bereich von 200 bis 5 000 aufweist.

7. Thermische Grenzflächenmaterialzusammensetzung nach Anspruch 6, wobei das silanterminierte Urethanvorpolymer ein Molekulargewicht im Bereich von 300 bis 3 000 aufweist.

8. Thermische Grenzflächenmaterialzusammensetzung nach Anspruch 7, wobei das silanterminierte Urethanvorpolymer ein Molekulargewicht im Bereich von 500 bis 2 000 aufweist.

9. Artikel umfassend die in Anspruch 1 aufgeführte thermische Grenzflächenmaterialzusammensetzung.

10. Artikel nach Anspruch 9, der ferner ein Batteriemodul umfasst, das aus einer oder mehreren Batteriezellen und einer Kühleinheit gebildet ist, wobei das Batteriemodul mit der Kühleinheit über die thermische Grenzflächenmaterialzusammensetzung verbunden ist.

## Revendications

1. Composition de matériau d'interface thermique comprenant :
a) un prépolymère de polyuréthane non réactif, qui i) est un produit réactionnel d'au moins un polyisocyanate et d'au moins un composé contenant un groupe hydroxyle, et ii) contient moins de 0,8 % en pds de groupes isocyanates résiduels ;
b) de 70 à 95 % en pds de trihydroxyde d'aluminium ;
c) de 0,15 à 1,5 % en pds d'au moins un prépolymère d'uréthane à terminaison silane ; et
d) de 1 à 20 % en pds d'au moins un agent plastifiant,
le poids total du matériau d'interface thermique s'élevant à 100 % en pds.

2. Composition de matériau d'interface thermique selon la revendication 1, dans lequel le prépolymère de polyuréthane non réactif est présent à un niveau de 1 à 25 % en pds, sur la base du poids total de la composition.

3. Composition de matériau d'interface thermique selon la revendication 1, dans lequel le prépolymère d'uréthane à terminaison silane est présent à un niveau de 0,15 à 1,2 % en pds, sur la base du poids total de la composition.

4. Composition de matériau d'interface thermique selon la revendication 3, dans lequel le prépolymère d'uréthane à terminaison silane est présent à un niveau de 0,2 à 0,8 % en pds, sur la base du poids total de la composition.

5. Composition de matériau d'interface thermique selon la revendication 1, dans lequel le prépolymère d'uréthane à terminaison silane est sélectionné parmi des produits réactionnels d'au moins un silane fonctionnalisé avec un groupe isocyanate avec un ou plusieurs polyols, des produits réactionnels d'au moins un silane fonctionnalisé avec un groupe isocyanate avec un ou plusieurs prépolymères à terminaison hydroxyle, et des produits réactionnels d'au moins un silane fonctionnalisé nucléophile avec un ou plusieurs prépolymères à terminaison isocyanate.

6. Composition de matériau d'interface thermique selon la revendication 1, dans lequel, le prépolymère d'uréthane à terminaison silane présente un poids moléculaire compris entre 200 et 5 000.

7. Composition de matériau d'interface thermique selon la revendication 6, dans lequel, le prépolymère d'uréthane à terminaison silane présente un poids moléculaire compris entre 300 et 3 000.

8. Composition de matériau d'interface thermique selon la revendication 7, dans lequel, le prépolymère d'uréthane à terminaison silane présente un poids moléculaire compris entre 500 et 2 000.

9. Article comprenant la composition de matériau d'interface thermique selon la revendication 1.

10. Article selon la revendication 9, qui comprend en outre un module de batterie qui est formé d'une ou de plusieurs cellules de batterie et d'une unité de refroidissement, dans lequel le module de batterie est connecté à l'unité de refroidissement par l'intermédiaire de la composition de matériau d'interface thermique.
